# EUROPEAN PATENT APPLICATION

(11) **EP 1 712 577 A2**
(43) Date of publication of application: **18.10.2006**
(21) Application number: 06006273.4
(22) Date of filing: 27.03.2006
(51) Int. Cl.: C08G 18/36, C09J 175/06

(54) **Bio-based, multipurpose adhesive**

(30) Priority: 12.04.2005 US 104199
(71) Applicant: Niemann, Lance K., Prescott Valley AZ 86314 (US)
(72) Inventor: Niemann, Lance K., Prescott Valley AZ 86314 (US)
(74) Representative: Wagner, Karl H.

(57) **Abstract**

The invention is a two part urethane adhesive in which the B side component is derived chiefly from a vegetable oil, preferably soy oil. Preferably the vegetable oil derivative is a hydroxylated vegetable oil which is present in the B side component at a concentration from 65 to 98 weight percent. Optionally, a phosphated soy oil can be present in an amount from 0.1 to 15 weight percent to enhance the adhesive properties, particularly for use on metals. Also, water can be present in an amount from 0.1 to 10 weight percent with a slight amount of a surfactant to stabilize the mixture.. Catalysts are included in the B side component to reduce the amount of the A side component and to accelerate curing of the adhesive. The A and B side components are admixed in amounts which provide from 40 to 90 weight percent of bio-based content in the adhesive. The adhesive also has a volatile organic content (VOC) less than 2 weight percent and most preferably no VOC.

## Description

### BACKGROUND OF THE INVENTION

### 1. Field of Invention

This invention relates to adhesive compositions, and in particular to adhesive compositions which contain a major proportion of bio-based components and have extremely low volatile organic contents.

### 2. Brief Statement of the Prior Art

The vast majority of adhesives currently marketed are based on petroleum derived components. Typical of these are acrylic, urethane and epoxy adhesives. Urethane adhesives, which can be produced with a wide variety of physical properties are widely used in various fields such in roofing and flooring for the construction industry, in bonding wood fibers and chips into boards for the lumber industry, in the footwear industry and for numerous applications in packaging operations, Although single component urethane adhesives and hot melts which use a polyurethane dissolved in a volatile solvent or a reactive prepolymer are available, the majority of urethane adhesives use two reactive components. The components are commonly referred to as the A and B sides, which, respectively, are an organic isocyanate an a reactive polyol. These are usually methylene diphenyl diisocyanate for the A side, and a polyether polyol such as polypropylene glycol or a polyester polyol such as ethylene adipate diol for the B side.

The urethane adhesives currently in use are derived predominately from petroleum sources and are subject to price fluctuations and availabilities of petroleum and natural gas which are dictated by the demands of the energy markets, the dwindling gas and oil supplies and the volatility of international politics. Petroleum base components additionally adversely affect the environment since they impart high volatile organic contents to adhesives.

Bio-based sources such as soy oil, castor oil, palm oil, linseed oil, etc. have been suggested as substitutes for the polyols in the B side component of the urethane reactants, particularly for manufacture of foam products, as they provide the promise of a relatively stable, renewable raw material source. Examples are: U.S. Patent 6,624,244 and 6,465,569 which disclose the combination of a multi functional polyol such as ethylene glycol and blown soy oil to react with an isocyanate to form a urethane foam; and U.S. Patents 6,649,667 which discloses the reaction of a mixture of a polyester or polyether polyol and a blown vegetable oil with an isocyanate in a reaction-injection-molded (RIM) process to produce a closed cell polyurethane foam.

U.S. Patent 6,180,686 discloses a polyurethane foam prepared by reaction of an isocyanate with a mixture of a blown vegetable oil and a polyether polyol.

U.S. Patent 4,546,120 discloses polyurethane foams and coatings which are formed by the reaction of an organic polyisocyanate with an epoxidized fatty alcohol derived from vegetable oils. Although the vegetable oil polyol can be the only polyol, the patentees disclose that it forms hard cast polyurethanes after a lengthy cure. The preparation of useful polyurethane foams and coatings required the addition of a polyester or polyether polyol to the vegetable oil polyol.

### OBJECTIVES OF THE INVENTION

It is an objective of this invention to provide an adhesive which is based, in part, on a renewable, vegetable source.

It is a further objective of this invention to provide an adhesive having the majority of its composition based on a renewable, vegetable source.

It is also an objective of this invention to provide an adhesive composition which can be formulated to various physical properties required for a selected application.

It is likewise an objective of this invention to provide an adhesive urethane composition which minimizes the quantity of reactive organic isocyanate.

It is an additional objective of this invention to provide an adhesive composition which has no or negligible volatile organic content.

Other and related objectives will be apparent from the following description of the invention.

### BRIEF DESCRIPTION OF THE INVENTION

This invention comprises a two part urethane adhesive in which the B side component is derived from a vegetable oil, preferably soy oil. The reactant portion of the B side component is composed of one or more derivatives of the vegetable oil. Preferably the hydroxylated vegetable oil is present in the B side component at a concentration from 65 to 98 weight percent. Optionally, a phosphated soy oil can be present in an amount from 0.1 to 15 weight percent to enhance the adhesive properties, particularly for use on metals. Also, water can be present in an amount from 0.1 to 10 weight percent with a slight amount of a surfactant to stabilize the mixture.. Catalysts are included in the B side component to reduce the amount of the A side component and to accelerate curing of the adhesive. The A and B side components are admixed in amounts to provide from 5 to 40 weight percent of organic polyisocyanate (A side) and from 60 to 95 weight percent parts polyol (B side component) in the adhesive. When maximum adhesion is desired, the A side is used in amounts from 35-40 weight percent and the B side component is used in amounts from 60 to 65 weight percent of the adhesive.

### DESCRIPTION OF PREFERRED EMBODIMENTS

The urethane adhesive of this invention is characterized by a very low volatile organic content (VOC) and a high bio-based content. The VOC value of the adhesive of this invention is less than 2 weight percent and preferably less than 1 weight percent. In the most preferred embodiment, the adhesive has no volatile organic content. The volatile organic content (VOC) can be determined as the weight loss from a sample held at 110°C. for one hour, less the weight percent water in the sample.. A more complete description of a suitable test method is in the specification for ASTM 24.

The bio-based content of the adhesive is from 40 to 90 weight percent; preferable from 65 to 75 weight percent, as determined analytically by radio carbon isotope mass spectroscopy as described in ASTM D 6866-04, or by other equivalent testing. The urethane adhesive of this invention is formed by mixing A and B side components (reactants). The A side component comprises an organic polydiisocyanate such as commonly used as a reactant in polyurethane manufacture. Included in useful polyisocyanates are those based on monomers such as 4,4' diphenylmethane diisocyanate; 2,4' diphenylmethane diisocyanate; toluene diisocyanate, 2,4' toluene diisocyanate, etc. The preferred polydiisocyanate is based on 4,4' diphenylmethane diisocyanate known as Mondur MR (available from Bayer Corporation) which has a NCO content of 31.5% and a viscosity from 150-250 at 25°C.

The B side component is essentially a vegetable oil derivative. Preferably a hydroxylated vegetable oil is used, however, a phosphated vegetable oil can be used with the hydroxylated vegetable oil to enhance the adhesive properties. Significantly, polyether and polyester polyols, which have been used previously in B side components as crosslinking agents in combination with vegetable oil polyols are not used in the adhesive of this invention. These reactants are objectionable as they are petrochemicals and they increase the volatile organic content of the adhesive and reduce the bio-based content of the adhesive..

Suitable hydroxylated soy oils for this application are available commercially from Urethane Soy Systems. Alternatively, the hydroxylated vegetable oil can be prepared by hydrolyzing an epoxidized vegetable oil. Various vegetable oils can be selected as the raw material source, including olive oil, corn oil, sunflower oil, canola oil, cottonseed oil, palm oil, etc.. The preferred vegetable oil is soy oil because of its availability and high content of triglycerides of unsaturated fatty acids such as linoleic, oleic and linolenic acids and lesser contents of triglycerides of saturated fatty acids such as palimitic and stearic acids. The crude vegetable oil is usually refined by settling to separate gums and other insoluble and congeneric impurities such as color bodies and phospholipids. The oil layer is removed and can be further treated with an alkali to remove free fatty acids which may be present

The refined vegetable oil can be epoxidized by reaction with a peroxide such as hydrogen peroxide, and per-organic acids, such as peracetic acid, perbenzoic acid, etc. The vegetable oils can also be epoxidized by reaction with oxygen. The most preferred preparation is the oxidation of soy oil, preferably by blowing air through the soy oil for a sufficient time, from 180 to about 600 minutes at a temperature from ambient to about 320°F., sufficient to oxidize the unsaturated groups of the triglyceride esters in the soy oil. Alternatively, epoxidized or blown vegetable oils are commercially available from the ADM Company.

The blown or epoxidized soy oil is hydrolyzed to open the epoxy rings and form adjacent hydroxyl groups, thus preparing a reactive polyol. The hydrolysis is preferably conducted by reacting the blown soy oil with water at a temperature from 340°F. to about 390°F. over a time from 5 to about 10 hours, to prepare a hydroxylated soy oil having a hydroxyl number from 50 to 190, depending on the degree of adhesion desired in the final adhesive composition. For adhesive compositions having high adhesion, a hydroxylated derivative having a hydroxyl number in the high end of the range, e.g., from 135 to 190 is used. For less adhesive products, such as those to be applied as a carpet adhesive, hydroxylated soy oil having a hydroxyl number from 50 to about 135 can be used.

The phosphated vegetable oil is prepared from epoxidized soy oil by reacting the epoxidized oil with phosphoric acid. Preferably by adding concentrated phosphoric acid (70% to 72% P₂O₅) to the vegetable oil at concentrations of 0.5 to 1.5 weight percent in the oil. An exothermic reaction occurs and the reaction is continued, while stirring, for 5 to 15 minutes. The treated soy oil which contains tri-phosphate esters is then heated to a temperature from 95°F. to 120°F., preferably 110°F. and water and a small amount of phosphoric acid is added to complete the reaction. This reaction is continued to prepared a phosphated vegetable oil containing from 1 to 3.5 weight percent phosphorus chemically bonded to the oil. The phosphated vegetable oil derivative functions to greatly increase the adhesion of the adhesive composition and, therefore, is used in variable concentrations, depending on the degree of adhesion desired in the final adhesive.

When it is desired to have an expanded adhesive, water can be added to the B side component to foam the adhesive during curing. Depending on the application and extent of foaming desired, water can be added to the B side component in an amount from 0.1 to 10 weight percent. When water is added, from 0.05 to 1.5 weight percent of a surfactant, preferably a silicone surfactant is also added to the B side component to improve or stabilize the cell structure of the foamed adhesive. Examples of suitable surfactants are DC-198 and DC-193, which are silicone polyether surfactants available from Air Products.

The B side component can also contain various other additives, such as catalysts in amounts from 0.1 to 2 weight percent, to reduce the cure time of the adhesive. Suitable catalysts include organic compounds of metals such as bismuth tin and zinc. Examples of these are: bismuth or zinc neodecanoate, dibutyltin dilaurate, dibutyltin diacetate, etc. Preferably organic tin compounds are used. Most preferably, a tertiary amine in an amount from 0.1 to 2 weight percent is added as a cocatylst. Examples of suitable tertiary amines are: pentamethyl diethylene diamine, triethylenediamine, tributyl amine, tetramethylethylene diamine, etc.

The A and B components of the adhesive are admixed together in proportions from 5 to about 40 parts of the A component to 60 to 95 parts of the B component. Preferably, the minimum amount of the diisocyanate (A side) is used, e.g., from about 15 to 35 weight parts A component with from about 65 to 85 weight parts of the B component.

Depending on the application, the cure time of the adhesive can be widely varied. In most applications, a rapid cure is desired and for these applications, a polyol with a high hydroxyl value, e.g., from 135 to 190 can be used. Also, the amount of the A component can be increased to obtain the fast cure times, e.g., the amount of the A component can be selected from 35 to 40 weight parts per 60 to 65 weight parts of the B component to reduce the cure time. Preferably, the components and their relative proportions are selected to provide adhesives having cure times from 1 to about 360 minutes, most preferably from 2 to about 60 minutes.

The adhesive composition can be applied to surfaces of widely varied materials, including metal, plastic, wood and wood fibers, concrete, ceramics, tile, paper, cardboard, fabrics and textiles, etc. It can be foamed to any degree desired to serve as a sealant and an adhesive simply by adjustment of the proportions of reactants.

The A and B components can be marketed in separate containers sized in conformity to the relative proportions of the components which are desired in the final adhesive and can be manually mixed prior to or during application. In a preferred embodiment, the A and B components are packaged in a two side-by-side cylinders which are secured together in a single package and which have dispensing plungers secured to a common dispensing handle. The cylinder contents are extruded from their respective cylinders into a static mixer and the mixture is dispensed through a single nozzle. For convenience in application, the Side B component can be packaged in a caulking cylinder and the Side A component can be packaged in a cylinder of lesser diameter to provide approximately 1/4 the volume of the larger cylinder and can be secured piggyback to the larger cylinder, with both cylinders discharging into a common extruder mixer. A dispensing tool comprising a modification of a conventional caulking gun with a second plunger for the piggyback cylinder can be used to extrude the components in the proper proportions.

The invention will be described by the following examples:

### EXAMPLE 1

An adhesive composition is prepared from the following B side component:

| Component | Concentration (weight parts per 100) |
|---|---|
| Hydroxylated Soyoil¹ | 92.8 |
| Water | 4 |
| Polycat 5² | 2 |
| Tin Catalyst³ | 0.2 |
| Surfactant⁵ | 1.0 |

| | |
|---|---|
| ¹ hydroxyl number = 190 ² pentamethyl diethylene diamine ³ dibutyltin dilaurate ⁴ silicone polyether | |

This B side component is admixed with an A side component comprising a MDI (diphenylmethane diisocyanate) polyisocyanate (Mondur MR) in proportions of 20 parts Side A and 80 parts Side B. The B component has a bio-based content of 83 percent and the resultant adhesive has a bio-based content of 66 percent. The mixed adhesive has a volatile organic content (VOC) less than 1..0 percent. The adhesive is applied to the paper facer on a polyurethane foam construction board. The adhesive cures in approximately 2 minutes and when one attempts to peel the adhesive, it exhibits greater adhesion than the adhesive between the paper facer and the foam, since the paper facer separates from the foam board.

### EXAMPLE 2

An adhesive composition is prepared from the following B side component:

| Component | Concentration (weight parts per 100) |
|---|---|
| Hydroxylated Soyoil¹ | 84.4 |
| Phosphated Soy² | 10 |
| Dabco 33 LV 3³ | 4 |
| Water | 1 |
| Tin Catalyst⁴ | 0.1 |
| Surfactant⁵ | 0.5 |

| | |
|---|---|
| ¹ hydroxyl number = 170 ² phosphorus content =1.0% ³ triethylenediamine ⁴ dibutyltin dilaurate ⁵ silicone polyether | |

The B side component is admixed with an A side component comprising a MDI (diphenylmethane diisocyanate) polyisocyanate (Mondur MR) in proportions of 28 parts Side A and 72 parts Side B and the mixture is applied to a metal roofing panel which is secured to a metal framing component. The adhesive cures in approximately 8 minutes. The adhesion is adequate to reduce the number of metal fasteners by half the number usually used. The B component has a bio-based content of 93 percent and the admixed adhesive has a VOC less than 2 percent.

### EXAMPLE 3

An adhesive composition is prepared from the following B side component:

| Component | Concentration (weight parts per 100) |
|---|---|
| Hydroxylated Soyoil¹ | 98.2 |
| Water | 1 |
| Tin Catalyst² | 0.3 |
| Polycat 5³ | 2 |

| | |
|---|---|
| ¹ hydroxyl number = 55 ² dibutyltin dilaurate ³ pentamethyl diethylene diamine | |

The B side component is admixed with an A side component comprising Mondur MR in proportions of 12 parts Side A and 88 parts Side B. The resultant adhesive is applied to a fiber and foam carpet backing and full adhesion takes place in 3 hours, allowing adequate time to apply the adhesive and reposition and roll the carpet flat onto a wood or concrete floor substrate. The B component has a bio-based content of over 98 percent and the admixed adhesive has a VOC less than 1 percent.

When water is included in the Side B component, it is preferred to mix a trace amount of the Side A component into the Side B component to stabilize the component against phase separation. For this purpose, approximately 0.1 to 1 weight percent of the Side A component is added to the Side B component; an amount insufficient to initiate reaction, but sufficient to stabilize against phase separation, presumably by hydrogen bonding. The following example illustrates this embodiment.

### EXAMPLE 4

A B side component is prepared by mixing together the ingredients set forth in the following table:

| Component | Concentration (weight parts per 100) |
|---|---|
| Hydroxylated Soyoil¹ | 85.25 |
| Water | 11.0 |
| Dabco 33 LV² | 1.0 |
| Polycat 5³ | 1.5 |
| Tin catalyst⁴ | 3 |
| Surfactant ⁵ | 0.75 |
| Mondur MR⁶ | 0.2 |

| | |
|---|---|
| ¹ hydroxyl number = 190 ² triethylenediamine ³ pentamethyl diethylene triamine ⁴ dibutyl tin dilaurate ⁵ silicone polyther ⁶ polyisocyanate | |

A minor amount of the A side component, 0.2 weight parts of Mondur MR is added to the B side component to inhibit settling or phase separation. The resultant mixture shows excellent stability with no separation of water from the other ingredients after six months of aging. The B component has a bio-based content of over 85%. An adhesive is formed by mixing 30 parts by weight of an A side component (Mondur MR) with 70 parts of the B side component. The adhesive properties were excellent with a full cure time of 5 minutes. and the admixed adhesive has a VOC of less than 1%.

### EXAMPLE 5

An adhesive component is formed from the following B side reactant:

| Component | Concentration (weight parts per 100) |
|---|---|
| Hydroxylated linseed oil¹ | 94.0 |
| Water | 3 |
| Polycat 5² | 2 |
| Tin Catalyst ³ | 0.2 |
| Surfactant ⁴ | 0.8 |

| | |
|---|---|
| ¹ hydroxyl number = 190 ² pentamethyl diethylene diamine ³ dibutyl tin dilaurate ⁴ silicone polyether | |

The B side reactant is admixed with an A side reactant comprising a MDI (diphenylmethane diisocyanate) polyisocyanate (Mondur MR) in proportions of 24 parts Side A and 76 parts Side B and the mixture is applied to the paper facer on a polyurethane foam construction board and then is applied to a concrete surface.. The adhesive cures in approximately 2 minutes and when one attempts to peel the adhesive from a concrete surface, it exhibits greater adhesion than the adhesive between paper facer and the foam, since the paper facer separated from the foam board. The B component has a bio-based content of 93% and the admixed adhesive has a VOC of less than 1%.

## Claims

1. A polyurethane adhesive comprising:
a. an A side component comprising a reactive organic diisocyanate; and
b. a B side component comprising:
I. a isocyanate-reactive polyol consisting essentially of a hydroxylated vegetable oil having a hydroxyl number from 50 to about 190 mg/g in an amount from 65 to 98 weight percent;
ii. an organic metal catalyst in an amount from 0.1 to 2 weight percent.

2. The polyurethane adhesive of claim 1 wherein said adhesive has a volatile organic content less than 2 weight percent.

3. The polyurethane adhesive of claim 1 wherein the amount of hydroxylated vegetable oil in said B side component is from 85 to 95 weight percent.

4. The polyurethane adhesive of claim 3 wherein said adhesive has a volatile organic content less than 1 weight percent.

5. The polyurethane adhesive of claim 1 including from 0.1 to 10 weight percent water in the B side component.

6. The polyurethane adhesive of claim 5 including from 0.5 to 1.5 weight percent of an organic tin catalyst in said B side component.

7. The polyurethane adhesive of claim 6 including from 0.1 to 1 weight percent of a tertiary amine catalyst.

8. The polyurethane adhesive of claim 1 wherein the side A component is present in an amount of 5 to 40 weight percent and the B side component is present in an amount from 60 to 95 weight percent of the adhesive.

9. The polyurethane adhesive of claim 1 wherein the side A component is present in an amount of 3 5 to 40 weight percent and the B side component is present in an amount from 60 to 65 weight percent of the adhesive.

10. The polyurethane adhesive of claim 5 wherein said soy oil has a hydroxyl value from 135 to 190 mg/g.

11. The polyurethane adhesive of claim 1 including from 0.1 to 15 weight percent phosphated vegetable oil in the B side component.

12. The polyurethane adhesive of claim 1 having a bio-based content from 40 to about 90 weight percent.

13. The polyurethane adhesive of claim 1 having a bio-based content from 65 to about 75 weight percent.
